# EUROPÄISCHE PATENTSCHRIFT

(11) **EP 0 754 089 B1**
(45) Veröffentlichungstag und Bekanntmachung des Hinweises auf die Patenterteilung: **08.07.1998**
(21) Anmeldenummer: 95915847.8
(22) Anmeldetag: 05.04.1995
(51) Int. Cl.: B01D 53/14, B01D 53/70, A62D 3/00

(54) **VERFAHREN ZUR REINIGUNG VON OFENABGASEN**
METHOD OF PURIFYING OVEN EXHAUST GASES
PROCEDE D'EPURATION DE GAZ BRULES SE DEGAGEANT DE FOURS

(30) Priorität: 06.04.1994 AT 707/94
(43) Veröffentlichungstag der Anmeldung: 22.01.1997
(73) Patentinhaber: Austria Metall AG, A-5282 Ranshofen (AT)
(72) Erfinder: WAGNER, Josef, A-5282 Ranshofen (AT); DUCHACZEK, Hubert, A-4040 Linz (AT); WACHTER, Reinhard, A-5283 Braunau (AT)
(74) Vertreter: Kilian, Helmut, Dr.
(86) Internationale Anmeldenummer: EP9501243
(87) Internationale Veröffentlichungsnummer: WO9527553

(56) Entgegenhaltungen:
- EP-A- 0 112 053
- DE-A- 4 116 515
- DE-A- 4 119 006
- DE-C- 4 109 991

## Beschreibung

Die Erfindung betrifft ein Verfahren zur Reinigung von Ofenabgasen.

Das erfindungsgemäße Verfahren ist jenen Reinigungsmethoden zuzurechnen, bei denen der aus dem Ofen kommende Abgasstrom erst mit Zuschlagstoffen versetzt wird und in weiterer Folge in einem Abscheider wieder von Stäuben und Tröpfchen gereinigt wird.

Typische Ofenabgase, welche mit dem erfindungsgemäßen Verfahren gereinigt werden können sind die Abgase von Müllverbrennungsanlagen, von Gießöfen und von Öfen in welchen Schrott eingeschmolzen wird.

Als Abscheider dienen beispielsweise Gewebefilter, Schlauchfilter, Zyklone, elektrostatisch wirkende Abscheider oder Naßabscheider.

Die Zuschlagstoffe verbessern die Abscheidung von Schadstoffen wie z.B. Metalloxiden, sauren Komponenten, organischen Kohlenwasserstoffen, Dioxinen (PCDD) und Furanen (PCDF), bzw. erschweren sie die Bildung von bestimmten Schadstoffen.

Meist wirken die Zuschlagstoffe durch die Adsorption von Schadstoffen, also durch Anlagerung oder Bindung von Schadstoffen an einer spezifisch großen Oberfläche. Manchmal bewirken die Zuschlagstoffe auch eine chemische Umwandlung von Schadstoffen oder eine Blockierung von Katalysatoren, welche zur Bildung von Schadstoffen führen.

Die Zuschlagstoffe werden im Abscheider zusammen mit im Abgas von vornherein vorhanden Stoffen wieder abgeschieden.

Häufig wird das ofenheiße Abgas vor dem Eintritt in den Abscheider auch gequencht. Dabei wird über Düsen eine Flüssigkeit, zumeist eine wässerige basische Lösung, in den Abgaskanal eingesprüht. Mit der Flüssigkeit können auch die Zuschlagstoffe in gelöster oder dispergierter Form eingebracht werden. Die Flüssigkeit verdampft und kühlt das Abgas dadurch sehr rasch unter jenen kritischen Temperaturbereich ab, in welchem PCDD/PCDF gebildet werden. Dadurch, daß die Flüssigkeit basisch ist, werden saure Komponenten im Abgasstrom neutralisiert.

Bekannte Zuschlagstoffe, welche häufig in Kombination miteinander, entweder mit Wasser oder als Staub, auch in Verbindung mit Stoffen mit denen sie üblicherweise vorkommen, zugesetzt werden, sind Aktivkohle, Kalk (CaCO₃), Kalkhydrat (Ca(OH)₂), Magnesiumverbindungen (MgO, MgCO₃...) Natriumkarbonat (Na₂CO₃) und NH-Verbindungen.

Von diesen Zuschlagstoffen ist mit Aktivkohle die beste Abscheiderate von PCDD/PCDF zu erreichen. Einige der weiteren genannten Zuschlagstoffe können unter Umständen die Bildung von PCDD/PCDF sogar begünstigen. Aktivkohle kann aber nur in begrenztem Maß zugegeben werden, da ansonsten die Gefahr besteht, daß sich der anfallende Filterrückstand selbst entzündet. Aktivkohle ist zudem auch teuer.

Gemäß DE-C-4 109 991 erfolgt eine Zugabe einer Öl-Wasseremulsion in einen bereits in einem Naßverfahren vorgereinigten Abgasstrom, der mittels Naßfilter in einem Aerosolabscheider naß weitergereinigt wird.

Die der Erfindung zugrunde liegende Aufgabe besteht demgegenüber darin, einen Zuschlagstoff für die Rauchgasreinigung zu finden, für welchen gilt:
- Mit dem Zuschlagstoff sind gleich gute oder bessere Abscheideraten wie bei Verwendung von Aktivkohle als Zuschlagstoff erreichbar.
- Der Zuschlagstoff bewirkt nicht, daß der Filterrückstand leicht entzündbar wird.
- Der Zuschlagstoff ist billig.
- Der Zuschlagstoff bewirkt nicht, daß sich die Konsistenz und Zusammensetzung des Filterrückstandes wesentlich ändert.

Die Aufgabe wird erfindungsgemäß mit einem Verfahren mit den Merkmalen des Anspruchs 1 gelöst. Er werden als Zuschlagstoff ölige organische Substanzen auf der Basis von Mineralölen oder nativen Ölen verwendet, welche in Form von feinen Tröpfchen in den Abgaskanal eingesprüht werden, wobei die Abgastemperatur so eingestellt wird, daß zwar allfällig vorhandenes Wasser verdampft, die öligen organischen Substanzen aber weder verbrennen noch verdampfen. Statt dessen werden Öltröpfchen sowie dünne Ölschichten auf den Staubpartikeln im Abgas gebildet. In diesen Öltröpfchen und Ölschichten werden chlororganische Verbindungen, wie z.B. PCDD/PCDF gelöst. Man nutzt also damit die Absorption als Reinigungsmechanismus.

Bestimmte Gruppen von organischen Substanzen enthalten auch Stoffe welche die katalytischen Eigenschaften des Staubes im Abgas zur Bildung von PCDD/PCDF unterdrücken. Dies geschieht z.B. dadurch, daß im Staub vorkommende aktive Schwermetallionen, welche als Katalysator bei der Bildung von PCDD/PCDF von Bedeutung sind, durch Amine, Sulfonate, Glycolderivate etc., welche in den ölige organischen Substanzen vorkommen, gebunden werden.

In weiterer Folge werden aus dem Abgasstrom mit den schon bekannten Filterungsmethoden Stäube und Tröpfchen wieder abgeschieden.

Die öligen organischen Substanzen werden bevorzugt als Ölphase in einer Wasser-Öl-Emulsion in das ofenheiße Abgas eingedüst. Durch die Energieaufnahme des Wassers beim Verdampfen wird das Abgas sehr rasch unter jenen kritischen Temperaturbereich abgekühlt in welchem PCDD/PCDF gebildet werden. Die Abgastemperatur sollte nach dem Verdampfen des Wassers in der eingesprühten Emulsion im Bereich zwischen 120 und 280°C, vorzugsweise bei etwa 200°C liegen. Technisch wie wirtschaftlich eignen sich als derartige Quenchmittel Metallbearbeitungsemulsionen oder Emulsion von Walzwerken, insbesondere von Aluminiumwalzwerken, welche für den ursprünglichen Zweck unbrauchbar geworden sind, sehr gut.

Die Menge an zugegebenen öligen organischen Substanzen ist abhängig von der Art und Menge der im Abgas enthaltenen Verunreinigungen. Sie liegt im Bereich von 1 bis 200 Milligramm pro Normkubikmeter Abgas. Zumeist liegt sie zwischen zehn und hundert mg/Nm³ Abgas.

Wenn das zu reinigende Abgas aus irgendwelchen Gründen schon unter jenen Temperaturbereich abgekühlt ist in welchem PCDD/PCDF gebildet werden, so ist das Quenchen mit Wasser, bzw einer wässerigen basischen Lösung unnötig.

In der überwiegenden Zahl der Anwendungsfälle müssen auch basische Zuschlagstoffe wie z.B. Kalk zugegeben werden, da im Abgas die sauren Komponenten überwiegen und diese neutralisiert werden müssen.

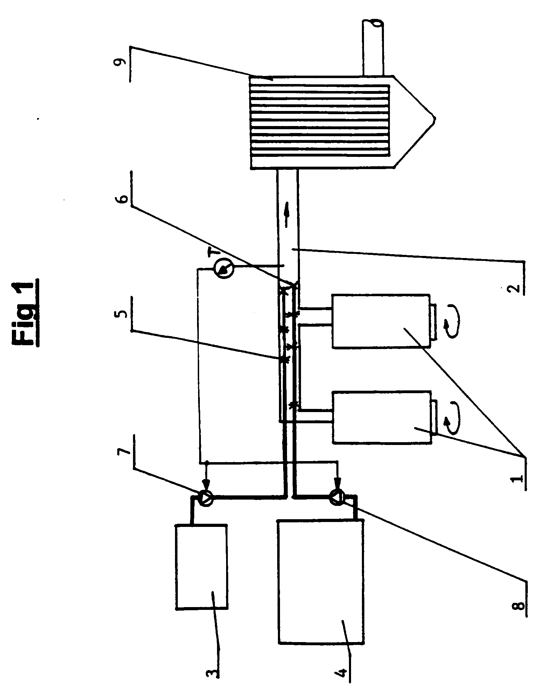

- Fig. 1 -: zeigt eine Verfahrensskizze eines Anwendungsbeispieles für das erfindungsgemäße Verfahren, wobei das Abgas aus zwei Trommelöfen (1) behandelt wird.
Aus einem Behälter (3) werden die erfindungsgemäßen Emulsionen zugegeben. Aus einem weiteren Behälter (4) werden basische Zuschlagstoffe in wässeriger Lösung zugegeben. Die Zuschlagstoffe werden über Düsen (5,6) in den Abgaskanal (2) eingesprüht. An einer in Strömungsrichtung knapp danach liegenden Stelle des Abgaskanales wird die Temperatur des nunmehr gequenchten Abgases gemessen. Abhängig von dieser Temperatur werden die Förderpumpen (7,8) auf eine größere oder kleinere Förderleistung eingestellt, sodaß die Abgastemperatur an der Meßstelle etwa konstant bei idealerweise 200°C bis 220°C liegt.
In weiterer Folge passiert das Abgas einen Abscheider (9) in welchem es von Staubpartikeln und Tröpfchen gereinigt wird.

Anstatt fertige Emulsion einzusprühen kann man auch die erfindungsgemäßen öligen Substanzen, beispielsweise ansonsten unbrauchbar gewordenes Altöl, und das Wasser bzw. die wässerige basische Lösung getrennt einsprühen. Ebenso ist auch möglich, aus einem Behälter eine Emulsion mit einem hohen Anteil Öl einzusprühen und aus einem weiteren Behälter Wasser bzw. eine wässerige basische Lösung. Man kann die eventuell erforderlichen basischen Zuschlagstoffe auch in Staubform oder in einer sehr hochkonzentrierten Lösung aus einem dritten Behälter zuführen. Dadurch wird es einfach möglich die Menge der eingesprühten organischen Komponenten proportional zur Abgasmenge, oder zur Schadstoffmenge einzustellen, die Menge des eingesprühten Wassers allein von der Solltemperatur des Abgasstromes nach dem Verdampfen des Wassers abhängig zu machen und die Menge der zugegebenen basischen Stoffe allein nach der Menge der sauren Schadstoffe im Abgas zu bemessen.

Mittels zweier Öfen, mit denen Sekundäraluminium aus Aluminiumschrott, Aluminiumspänen und Krätze von Aluminiumgießöfen erschmolzen wird, wurden die erfindungsgemäßen Zuschlagstoffe auf ihre Wirkung hin getestet.

Das Abgas beider Öfen wird in einen Kanal zusammengefaßt. Der Abgasstrom wird gequencht und es werden Zuschlagstoffe beigegeben. Anschließend wird das Abgas durch einen Schlauchfilter geleitet in welchem Staubpartikel und Tröpfchen abgeschieden werden.

Herkömmlich wird das Abgas mit etwa 300 Liter Wasser pro Stunde gequencht, sodaß die Temperatur des Abgasstromes auf etwa 200°C absinkt. An Zuschlagstoffen wird pro Stunde 15 kg staubförmiges Kalkhydrat (CaOH₂) zugegeben. Es fallen 100 bis 200 kg Filterstaub pro Stunde an. Das Abgas, welches aus dem Schlauchfilter kommt, das sog. Reingas ist dabei noch mit PCDD/PCDF im Bereich von wenigen Nanogramm pro Normkubikmeter belastet.

Bei einem Vergleichsversuch wurde mit gleichartiger Ofenchargierung und Befeuerung gearbeitet. In den Abgasstrom wurde auch die gleiche Menge Wasser eingequencht und die gleiche Menge Kalkhydrat zugegeben. Zusätzlich wurde pro Stunde noch zehn Liter gebrauchte Walzölemulsion aus einem Aluminiumwalzwerk in den Abgasstrom eingequencht und zwar an der Stelle, an der auch das Wasser eingequencht wurde. Die Emulsion bestand zu 90% aus Wasser und zu 10% aus erfindungsgemäßen öligen organischen Substanzen. Sie setzten sich zusammen aus 80% mittelviskosem Mineralöl, 5% nativen Ölen, 10% nichtionogenen Emulgatoren und 5% ionogenen Emulgatoren (Sulfonsäurederivate und Ethanolaminseifen). - Damit wurde der PCDD/PCDF-Gehalt im Reingas auf weniger als 0,5 Nanogramm pro Normkubikmeter, also auf ein ca 10% der ursprünglichen Wertes gesenkt.

Menge; Konsistenz und PCDD/PCDF-Gehalt im Filterrückstand war bei den beiden verglichen Methoden fast gleich.

Obwohl bei der erfindungsgemäßen Zugabe von öligen organischen Substanzen in den Abgaskanal das Reingas einen deutlich verringerten PCDD/PCDF-Gehalt aufwies, wies der Filterrückstand keinen signifikant erhöhten PCDD/PCDF-Gehalt auf. Das ist ein Hinweis darauf, daß die erfindungsgemäßen Substanzen nicht nur PCDD/PCDF absorbieren, sondern auch deren Bildung behindern.

Die Masse der erfindungsgemäß zugegebenen organischen Substanzen betrug weniger als ein Prozent der Masse des anfallenden Filterrückstandes. Damit wird deutlich, daß noch wesentlich mehr erfindungsgemäße organische Substanzen zugegeben werden könnten, ohne daß der Filterrückstand dadurch in gefährlicher Weise entzündbar würde.

Es wird damit auch deutlich, daß problemlos eine so große Menge der erfindungsgemäßen öligen organischen Substanzen als Zuschlagstoff eingesetzt werden kann, daß dadurch eine gleich gute Reinigungswirkung erzielbar ist wie durch Zugabe der maximal möglichen Menge an Aktivkohle.

Die erfindungsgemäß zugeschlagenen organischen Substanzen sind in jedem Fall wesentlich billiger als die von der Wirkung als Zuschlagstoff her vergleichbar gute Aktivkohle. Wenn Altöle und Altemulsionen verwendet werden können, so können damit sogar Entsorgungskosten, welche ansonsten für diese Substanzen anfallen würden, vermieden werden.

## Patentansprüche

1. Verfahren zur Reinigung von Ofenabgasen, wobei dem aus dem Ofen kommenden Abgasstrom staubförmige Zuschlagstoffe beigegeben werden und in weiterer Folge die Zuschlagstoffe zusammen mit sonst im Abgasstrom enthaltenen Inhaltsstoffen an einem Gewebefilter abgeschieden werden, dadurch gekennzeichnet, daß dem die staubförmigen Zuschlagstoffe enthaltenden Abgasstrom vor seinem Eintritt in den Gewebefilter ölige Substanzen im Ausmaß von 1 bis 200 Milligramm pro Normkubikmeter Abgas zugegeben werden, wobei die Temperatur des Abgasstromes durch Kühlung derart eingestellt wird, daß diese öligen Substanzen weder verbrennen noch verdampfen.

2. Verfahren nach Anspruch 1, dadurch gekennzeichnet, daß der Gewebefilter ein Schlauchfilter ist.

3. Verfahren nach Anspruch 1 oder 2, dadurch gekennzeichnet, daß als ölige organische Substanz Altöl verwendet wird.

4. Verfahren nach Anspruch 1 oder 2, dadurch gekennzeichnet, daß die öligen organischen Substanzen als Ölphase einer Wasser-Öl-Emulsion in den Abgasstrom eingebracht werden.

5. Verfahren nach Anspruch 4, dadurch gekennzeichnet, daß für die Wasser-Öl-Emulsion eine für den ursprünglichen Zweck unbrauchbar gewordene Metallbearbeitungsemulsion verwendet wird.

6. Verfahren nach Anspruch 4, dadurch gekennzeichnet, daß für die Wasser-Öl-Emulsion eine für den ursprünglichen Zweck unbrauchbar gewordene Walzölemulsion verwendet wird.

7. Verfahren nach einem der vorhergehenden Ansprüche, dadurch gekennzeichnet, daß die Temperatur des Abgasstromes dadurch eingestellt wird, daß gleichzeitig mit den öligen Substanzen Wasser in den Abgasstrom eingebracht wird, welches im Abgasstrom verdampft.

8. Verfahren nach einem der vorhergehenden Ansprüche, dadurch gekennzeichnet, daß gleichzeitig mit den öligen Substanzen eine wässerige basische Lösung in den Abgasstrom eingebracht wird, aus der in weiterer Folge das Wasser verdampft.

9. Verfahren nach einem der vorhergehenden Ansprüche, dadurch gekennzeichnet, daß gleichzeitig mit den öligen Substanzen basische Zuschlagstoffe in staubförmigem Zustand in den Abgasstrom eingebracht werden.

## Claims

1. Method of purifying furnace waste gases, wherein powdery additives are added to the flow of waste gases exiting from the furnace and subsequently the additives are separated out at a textile filter together with any constituents otherwise contained in the waste gas flow, characterised in that oily substances in a quantity of 1 to 200 milligrams per standard cubic meter of waste gas are added to the waste gas flow containing the powdery additives prior to its passage into the textile filter, wherein the temperature of the waste gas flow is controlled by cooling in such a manner that these oily substances neither burn nor vaporize.

2. Method according to claim 1, characterised in that the textile filter is a bag filter.

3. Method according to claim 1 or 2, characterised in that waste oil is used as the oily organic substance.

4. Method according to claim 1 or 2, characterised in that the oily organic substances are introduced into the waste gas flow as an oil phase of a water-oil emulsion.

5. Method according to claim 4, characterised in that a metal-processing emulsion which has become unusable for the original purpose is used for the water-oil emulsion.

6. Method according to claim 4, characterised in that a rolling-oil emulsion which has become unusable for the original purpose is used for the water-oil emulsion.

7. Method according to any one of the preceding claims, characterised in that the temperature of the waste gas flow is controlled by virtue of the fact that simultaneously with the oily substances water is introduced into the waste gas flow and this evaporates in the waste gas flow.

8. Method according to any one of the preceding claims, characterised in that simultaneously with the oily substances an aqueous basic solution is introduced into the waste gas flow, from which subsequently the water evaporates.

9. Method according to any one of the preceding claims, characterised in that simultaneously with the oily substances basic additives are introduced in a powdery state into the waste gas flow.

## Revendications

1. Procédé pour purifier des gaz d'échappement de fours, selon lequel des additifs sous forme de poussière sont ajoutés au courant de gaz d'échappement arrivant du four et, ultérieurement, les additifs se déposent conjointement avec des substances contenues par ailleurs dans le courant de gaz d'échappement, sur un filtre en tissu, caractérisé en ce qu'avant l'entrée du courant de gaz d'échappement, contenant les additifs sous forme de poussière, dans le filtre en tissu on ajoute à ce courant de gaz des substances huileuses en une proportion de 1 à 200 mg par mètre cube dans les conditions normales, la température du courant de gaz d'échappement étant réglée par refroidissement de telle sorte que ces substances huileuses ne brûlent pas et ne se vaporisent pas.

2. Procédé selon la revendication 1, caractérisé en ce que le filtre en tissu est un filtre à manche.

3. Procédé selon la revendication 1 ou 2, caractérisé en ce qu'on utilise de l'huile usée en tant que substance organique huileuse.

4. Procédé selon la revendication 1 ou 2, caractérisé en ce qu'on introduit les substances organiques huileuses sous la forme de la phase huile d'une émulsion eau-huile dans le courant de gaz d'échappement.

5. Procédé selon la revendication 4, caractérisé en ce que pour l'émulsion eau-huile, on utilise une émulsion d'usinage métallique devenue inutilisable pour son but d'utilisation initial.

6. Procédé selon la revendication 4, caractérisé en ce que pour l'émulsion eau-huile, on utilise une émulsion d'huile de laminage devenue inutilisable pour le but d'utilisation initial.

7. Procédé selon l'une des revendications précédentes, caractérisé en ce qu'on règle la température du courant de gaz d'échappement par le fait qu'on introduit dans le courant de gaz d'échappement, en même temps que les substances huileuses, de l'eau qui se vaporise dans le courant de gaz d'échappement.

8. Procédé selon l'une des revendications précédentes, caractérisé en ce qu'on introduit dans le courant de gaz d'échappement en même temps que les substances huileuses, une solution basique aqueuse, a partir de laquelle l'eau est vaporisée ultérieurement.

9. Procédé selon l'une des revendications précédentes, caractérisé en ce qu'on introduit dans le courant de gaz d'échappement des additifs basiques sous forme de poussière en même temps que les substances huileuses.
